# EUROPEAN PATENT APPLICATION

(11) **EP 2 991 025 A1**
(43) Date of publication of application: **02.03.2016**
(21) Application number: 14787441.6
(22) Date of filing: 24.04.2014
(51) Int. Cl.: G06Q 50/06, H02J 3/00

(54) **PRICE SETTING DEVICE AND POWER REGULATION DEVICE**

(30) Priority: 26.04.2013 JP 2013093276
(71) Applicant: Panasonic Intellectual Property Management Co., Ltd., Osaka 540-6207 (JP)
(72) Inventor: SATOMI, Toshiyuki, Osaka-shi, Osaka 540-6207 (JP); ADACHI, Masakazu, Osaka-shi, Osaka 540-6207 (JP)
(74) Representative: Appelt, Christian W.
(86) International application number: PCT/JP2014/002296
(87) International publication number: WO 2014/174844

(57) **Abstract**

A price setting device (10) includes: an acquisition unit (11) that acquires a collection of forecast information; a price setting unit (12) that determines unit prices of electricity during a target period; and a period setting unit (13) that determines the target period. Each of the collection of forecast information is related to an area of areas (A1 to Az) to which at least one electric power supplier supplies electricity, and includes forecasted date and time if a corresponding area is to be affected by an anomalous event. The price setting unit (12) s a unit price of electricity in an accommodating area to be higher than a unit charge in a target area during the target period. The target area is an area to be affected by the anomalous event. The accommodating area is an area capable of interchanging electricity with the target area.

## Description

### TECHNICAL FIELD

The present invention relates generally to price setting devices and power regulation devices and, more particularly, to a price setting device configured to set a price (unit charge) of electricity received from a power grid, and a power regulation device configured to control charging and discharging of a storage battery based on the unit charge set by the price setting device.

### BACKGROUND ART

An electric power supplier usually has various kinds of multiple electric power facilities, such as thermal power plant, hydroelectric power plant, wind-power plant, and the like. However, there is an upper limit in a power supply capacity of an electric power supplier. Therefore, when the amount of consumed power increases comparatively, a supply-demand balance of electric power may become tight.

For example, if a disaster occurs, the disaster may cause damage to an electric power facility or an electric transmission facility, and thus may cause a decrease in the power supply capacity. In this case, a ratio of amount of the consumed power to the power supply capacity would increase, even when the amount of the consumed power does not change.

Further, it is conceivable that, in a case where a disaster is forecasted to occur, owners of storage batteries who are in an area forecasted to be affected by the disaster would increase battery levels of the storage batteries of them in preparation for a potential electric outage. In this case therefore, the demand of electric power would increase in the area forecasted to be affected by the disaster. As a result, the ratio of amount of the consumed power to the power supply capacity may increase, even when the power supply capacity does not decrease.

JP2011-166972A (hereinafter, referred to as "Document 1") discloses a technique of installing a wireless base station along with a power supply station for providing electric power to an on-vehicle battery (storage battery) of an electric vehicle. According to the technique of Document 1, even in a case of emergency (in an electric outage) in which commercial power supply of an electric power supplier is not available, the wireless base station can be powered by an on-vehicle battery of an electric vehicle.

However, even if the technique described in Document 1 is used, when owners of storage batteries who are in an area forecasted to be affected by a disaster increase battery levels of storage batteries of them in preparation for a potential electric outage, a shortage of electric power supply may occur. To be brief, in a time when a risk of a disaster is high, the supply-demand balance of electric power may become tight (the shortage of electric power supply may occur), because charging of storage batteries are performed in a wide region.

### SUMMARY OF INVENTION

It is an object of the present invention to provide a price setting device configured to set unit prices of electricity, so that occurrence of the tight margin of the supply-demand balance of electric power can be avoided, and to provide a power regulation device configured to cooperate with the price setting device to control charging and discharging of a storage battery.

A price setting device according to an aspect of the present invention includes: an acquisition unit configured to acquire a collection of forecast information on areas to which at least one electric power supplier supplies electricity, each of the collection of forecast information including forecasted date and time if a corresponding area is to be affected by an anomalous event; a period setting unit configured to determine a target period based on the collection of forecast information; and a price setting unit configured to set a unit charge, which is unit price of electricity, in one or more accommodating areas so as to be higher than a unit charge in one or more target areas during the target period, the one or more target areas being one or more areas of the areas to be affected by the anomalous event, the one or more accommodating areas being one or more areas of the areas not to be affected by the anomalous event and also capable of interchanging electricity with the one or more target areas.

A power regulation device according to an aspect of the present invention includes: a price acquisition unit configured to acquire information on a unit charge set by the price setting device; a power converter configured to perform charging and discharging of a storage battery; a controller configured to control an operation of the power converter; and a determination unit configured to perform charging of the storage battery in preference to discharging thereof in a period in which the unit charge is a predetermined setting value or less, and to perform discharging of the storage battery in preference to charging thereof in a period in which the unit charge exceeds the setting value.

The price setting device according to the aspect of the present invention has an advantage of capable of setting unit prices of electricity, so that occurrence of the tight margin of the supply-demand balance of electric power can be avoided. The power regulation device according to the aspect of the present invention has an advantage of capable of cooperating with the price setting device to control charging and discharging of a storage battery.

### BRIEF DESCRIPTION OF DRAWINGS

FIG. 1 is a block diagram of Embodiment 1;
FIG. 2 is a diagram used for illustrating an operation of Embodiment 1;
FIG. 3 is a block diagram of main parts of Embodiment 2;
FIG. 4 is a diagram illustrating an example of respective coverages of areas regarding Embodiment 1;
FIG. 5 is a diagram illustrating another example of respective coverages of areas regarding Embodiment 1; and
FIG. 6 is a block diagram of a specific example of a price setting device of Embodiment 1.

### DESCRIPTION OF EMBODIMENTS

In the embodiments described below, "anomalous event" means an event in which a ratio of total amount of consumed power to a power supply capacity of an electric power supplier is expected to be equal to or more than a threshold.

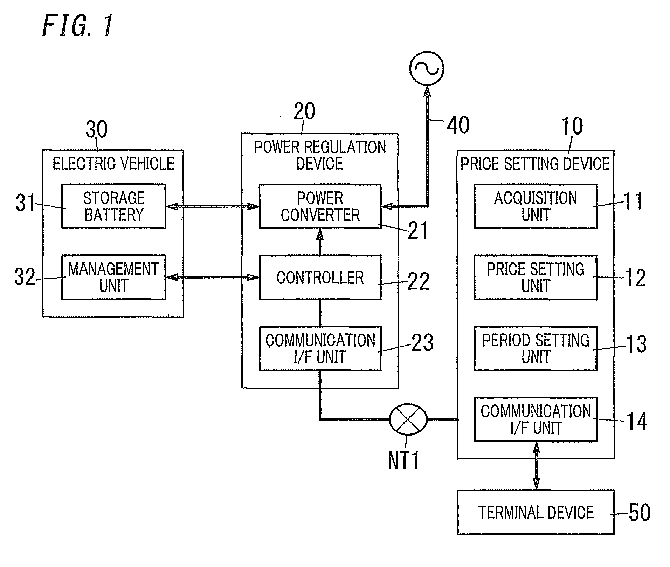

As shown in FIG. 1, a price setting device **10** of each of the following embodiments includes: an acquisition unit **11** configured to acquire a collection of forecast information; a price setting unit **12** configured to determine unit prices of electricity during a target period; and a period setting unit **13** configured to determine the target period. The collection of forecast information is a set of information about areas **A1** to **Az** to which at least one electric power supplier supplies electricity, and each of the collection of forecast information includes forecasted date and time if a corresponding area is to be affected by an anomalous event. The target period is determined (as a period for dealing with the anomalous event) by the period setting unit **13** based on the collection of forecast information. The price setting unit **12** is configured to set a unit charge, which is unit price of electricity, during the target period in one or more external areas (one or more accommodating areas) so that it is higher than a unit charge in one or more areas (one or more target areas) to be affected by the anomalous event, where the one or more accommodating areas are capable of interchanging electricity with the one or more areas (one or more target areas).

As shown in FIG. 1, the price setting device **10** includes a communication interface unit **14**, and is configured to notify, through the communication interface unit **14**, a terminal device **50** owned by a user of a unit charge set by the price setting unit **12** to allow the terminal device **50** to show the unit charge to the user, preferably.

Preferably, the price setting unit 12 is configured to set a unit charge during the target period in the one or more accommodating areas so that it is higher than a unit charge in the one or more accommodating areas in a period other than the target period. Preferably, the period setting unit 13 is configured to determine the target period based on a type of the anomalous event together with the collection of forecast information. Preferably, each of the collection of forecast information is warning information about disaster prevention. Each of the areas may be defined by a whole district to which a corresponding one of two or more electric power suppliers supplies electricity, or may be one of areas defined by dividing a whole district to which one electric power supplier supplies electricity.

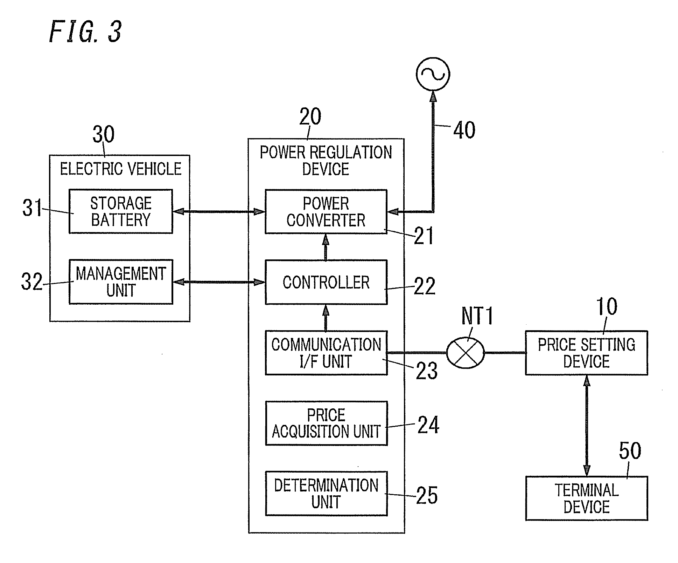

A power regulation device 20 includes a price acquisition unit 24, a power converter 21, a controller 22 and a determination unit 25 (see FIG. 3). The price acquisition unit 24 is configured to acquire information on a unit charge set by the price setting device 10. The power converter 21 is configured to perform charging and discharging of a storage battery 31. The controller 22 is configured to control an operation of the power converter 21. The determination unit 25 is configured to perform charging of the storage battery 31 in preference to discharging thereof in a period in which the unit charge is a predetermined setting value or less, and to perform discharging of the storage battery 31 in preference to charging thereof in a period in which the unit charge exceeds the setting value. Preferably, the storage battery 31 is provided in an electric vehicle 30.

Each of the embodiments described below include a price setting device 10 configured to set respective unit charges, which are respective unit prices of consumed power, with regard to areas to which at least one electric power supplier (electric utility, wholesale electricity utility, independent power producer, or the like) supplies electricity.

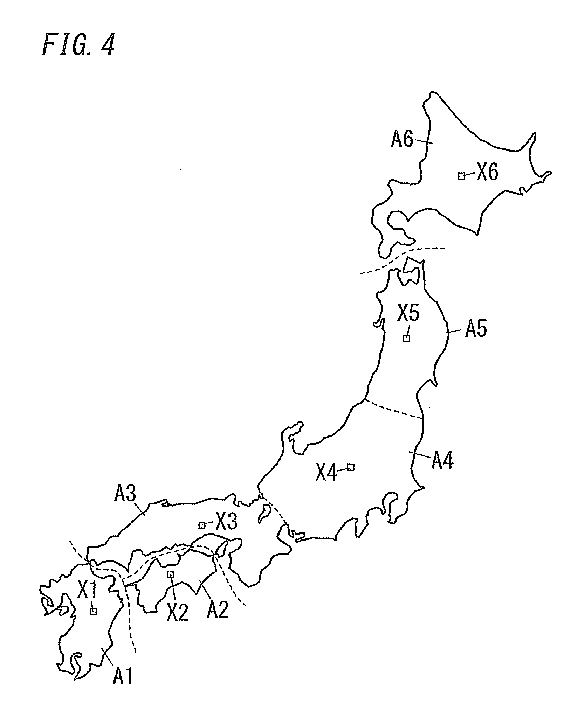

In an example shown in FIG. 4, the at least one electric power supplier includes two or more electric power suppliers **X1** to **Xz** (z=6, in the example of FIG. 4). "Unit charge setting areas of the price setting device 10" correspond to areas **A1** to **Az** to which the two or more electric power suppliers **X1** to **Xz** supply electricity. Each of the areas **A1** to **Az** is defined by a whole district to which a corresponding one **Xi** ("i" is an integer of 1 to z) of the two or more electric power suppliers supplies electricity (namely, supply area of a corresponding electric power supplier). In the example of FIG. 4, first to sixth electric power suppliers **X1** to **X6** are allocated to first to sixth areas **A1** to **A6**, respectively. The price setting device **10** is configured to set unit charges with respect to the first to sixth areas **A1** to **A6**.

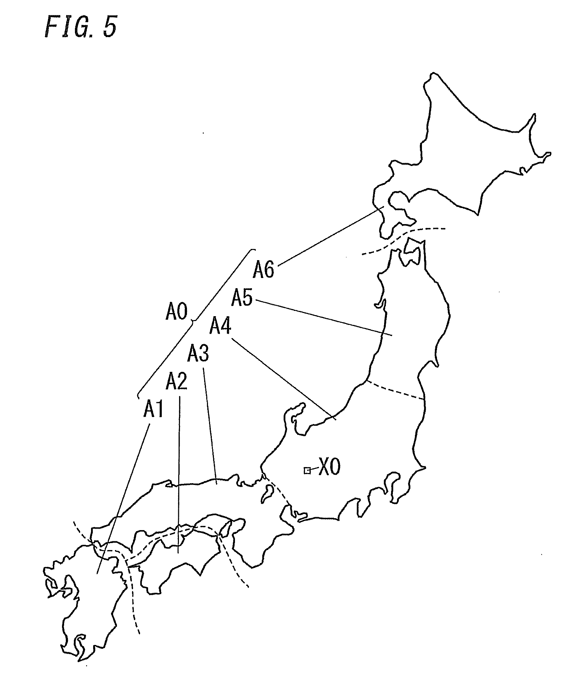

In another example shown in FIG. 5, the at least one electric power supplier is one electric power supplier **X0**. "Unit charge setting areas of the price setting device **10"** correspond to areas **A1** to **Az** (z=6, in the example of FIG. 5) defined by dividing a whole district **A0** to which the one electric power supplier **X0** supplies electricity. Each of the areas **A1** to **Az** corresponds to one of the areas **A1** to **Az** defined by dividing the whole district **A0** to which the one electric power supplier **X0** supplies electricity. In the example of FIG. 5, the whole district **A0** to which the electric power supplier **X0** supplies electricity is divided into first to sixth areas **A1** to **A6**. The price setting device **10** is configured to set unit charges with respect to the first to sixth areas **A1** to **A6**.

In other words, a unit area of "the unit charge setting areas of the price setting device **10"** is defined by a whole district (service area) to which a corresponding one electric power supplier supplies electricity (see FIG. 4), or is defined by dividing a whole district to which one electric power supplier supplies electricity (see FIG. 5).

In the embodiments described below, it is assumed that electricity can be interchanged between the areas **A1** to **Az** of which unit charges are set by the price setting device **10**, through a distribution network for electric power supply. For example, in a case where a unit area of "the unit charge setting areas of the price setting device **10"** is defined by a whole district to which one of the two or more electric power supplier supplies electricity (as the example of FIG. 4), electricity can be interchanged through the electric power suppliers **X1** to **Xz**. In a case where a unit area of "the unit charge setting areas of the price setting device 10" is defined by dividing a whole district **A0** to which one electric power supplier **X0** supplies electricity (as the example of FIG. 5), it is possible to interchange electricity between the areas **A1** to **Az** by the electric power supplier **X0**. Independent distribution networks are established in respective areas in a normal state, and distribution networks of different areas are connected to each other as appropriate, in order to allow the electricity to be interchanged between the areas.

As is understood from the above, the distribution networks of the areas **A1** to **Az** are independent from each other in a normal state. Therefore, with regard to an area **Ai** ("i" is an integer of 1 to z), if a ratio of amount of consumed power (including transmission loss and the consumed power in a load) in the area **Ai** to a power supply capacity of an electric power supplier increases, a decrease of the voltage of the distribution network may occur in the area **Ai**. Moreover, when the consumed power becomes above the power supply capacity, namely when the shortage of electric power supply to loads occurs, the electric power supply to the distribution network may be disrupted.

The embodiments described below relate to a technique of, in a case where a ratio of amount of consumed power to a power supply capacity may become equal to or more than a threshold in at least one area (hereinafter, referred to as "focused area") **An** ("n" includes at least one integer of 1 to z) of the areas **A1** to **Az**, facilitating to create surpluses of electric power in one or more external areas **Am** ("m" is an integer(s) not "n") which are outsides of the at least one focused area **An**. With this technique, the at least one focused area **An** can be supplied with electricity from the one or more external areas **Am**, and as a result an occurrence of the shortage of the electric power supply in the at least one focused area **An** can be prevented. Specifically, provided is a technique for facilitating transferring electricity from one or more areas **Am** (hereinafter, referred to as "accommodating area") not to be affected by an anomalous event to one or more areas **An** (hereinafter, referred to as "target area") in which the consumed power or the power supply capacity is expected to be affected by the anomalous event.

The "anomalous event" is such an event that a ratio of amount of consumed power to a power supply capacity is expected to be equal to or more than a threshold. Examples of the anomalous event include events which may cause disasters. In more detail, examples of the anomalous event include phenomena of weather which can be forecasted and informed in advance such as a typhoon (cyclone, hurricane), a tornado and a thunder, and natural phenomena which are difficult to be predicted in advance such as an eruption and an earth quake.

Such anomalous events may cause damage to one or more of electric power facilities and electric transmission facilities, and which may cause a decrease in a power supply capacity of an electric power supplier. In this case, if the consumed power does not change, the ratio of amount of the consumed power to the power supply capacity of the electric power supplier may rise to the threshold or more.

Also, when an occurrence of an anomalous event is forecasted and informed in advance, it is expected that owners of storage batteries perform charging of their storage batteries provided in electric vehicles or in electric storage devices, in preparation for a possible shortage of the electric power supply of the electric power supplier. If charging of lots of storage batteries are performed at the same time in the area forecasted to be affected by the anomalous event, the demand of electric power increases. As a result, the ratio of amount of the consumed power to the power supply capacity of the electric power supplier may rise to the threshold or more.

In the explanation below, information about forecasted date and time of an area to be affected by an anomalous event is referred to as "forecast information". Also, explained will be a case where the forecast information is warning information about disaster prevention. An example of the "warning notification about disaster prevention" is a weather warning provided by a public agency (for example, Japan Meteorological Agency (JMA) in Japan, or National Weather Service (NWS) in U.S.A.).

In general, regarding the warning notification about disaster prevention, zoned areas are defined, and each warning notification about disaster prevention is issued to one of the zoned areas as a unit. It is desirable that the unit areas defined by the electric power supplier(s) (namely, the unit area of the unit charge setting areas of the price setting device 10) are identical to the zoned areas as units for providing the warning notification, but, they are not identical in general. It is therefore preferable that the price setting device 10 is configured to set the "one or more target areas" so that the one or more target area includes whole of the warning notification provided areas.

The one or more target areas An means one or more areas where the consumed power or the power supply capacity is expected to be affected by the anomalous event (namely, one or more areas where the probability of occurrence of the tight supply-demand balance of electric power is high), of the areas A1 to Az of which unit charges are set by the price setting device 10. The one or more accommodating areas Am means one or more areas other than the one or more target areas An, of the areas A1 to Az of which unit charges are set by the price setting device 10, and areas where electricity can be interchanged with the one or more target areas An, and where the consumed power and the power supply capacity are expected toadjacent be substantially unaffected by the anomalous event (namely, one or more areas where the probability of occurrence of the tight supply-power balance of electric power is low). The accommodating area Am means an area around a target area An or adjacent to a target area An. However, even in a case where an area is apart from the one or more target areas **An** and thus cannot interchange electricity with any of the one or more target areas **An** directly, if the area can interchange electricity indirectly with a target area **An** through another area, the subject area can be regarded as an accommodating area **Am**.

A specific example of the case where an area can interchange electricity indirectly through another area is explained below. First, a focused area is named as an area (A). Also, an area adjacent to the area (A) is named as an area (B), and an area not adjoining to the area (A) but adjacent to the area (B) is named as an area (C). The area (C) cannot interchange electricity with the area (A) without passing through the area (B). In this case, if electricity is transferred from the area (B) to the area (A), and from the area (C) to the area (B) that transfers electricity to the area (A), electricity can be regarded to be transferred from the area (C) through the area (B) to the area (A), indirectly. In such a case, the area (C) can be regarded as an accommodating area interchanging electricity indirectly with the area (A) (target area).

In the example of FIG. 4, if electricity can be interchanged between the areas **A3** and **A4**, and also between the areas **A4** and **A5**, the area **A5** can be regarded to interchange electricity indirectly with the area **A3**.

### (Embodiment 1)

As shown in FIG. 1, a price setting system of the present embodiment includes a price setting device **10**, a power regulation device **20** and an electric vehicle **30** as main elements.

The electric vehicle **30** is provided with a storage battery **31** that stores energy, as an energy source for driving. Examples of the electric vehicle 30 include an electric drive vehicle, a hybrid car, and an electric motorcycle. The electric vehicle 30 includes a management unit 32 having a function configured to collect information on the storage battery 31 and a function configured to communicate with the power regulation device 20. Namely, the management unit 32 includes an information collection unit configured to collect information on the storage battery 31 and a communication unit configured to communicate with the power regulation device 20.

The management unit 32 is configured to store therein, as information on the storage battery 31, information (manufacture name, product number and the like) for identifying the storage battery 31, and to collect information (battery level, terminal voltage, the number (history) of charging and discharging, temperature, and the like) about the operation of the storage battery 31. Such information is sent to the power regulation device 20 by the management unit 32 communicating with the power regulation device 20. The management unit 32 also has a function configured to, when a failure occurs in the storage battery 31, notify the power regulation device 20 of the occurrence of the failure. Namely, the management unit 32 includes a failure notification unit configured to, when a failure occurs in the storage battery 31, notify the power regulation device 20 of the occurrence of the failure.

The power regulation device 20 includes a power converter 21 configured to perform charging and discharging of the storage battery 31, and a controller 22 configured to control an operation of the power converter 21. In other words, the power regulation device 20 functions as a power conditioner.

The power converter 21 is configured to convert an AC power supplied from a commercial power supply as a power grid 40 into a DC power, and to charge the storage battery 31 with this DC power. The power converter 21 is configured to generate an AC power in conformity with an AC power of the power grid 40 from the energy stored in the storage battery 31. The AC power generated by the power converter 21 is supplied to an electrical load(s) (not shown) in a customer facility. In the present in Japan for example, the AC power generated by the power converter 21 from the energy stored in the storage battery 31 is forbidden to be flowed back to the power grid 40. Therefore, it is preferable that the AC power generated by the power converter 21 be compared with power consumed in the electrical load(s) and that the output of the power converter 21 to the power grid 40 be regulated so as not to be flowed back to the power grid 40.

During the charging of the storage battery 31, the controller 22 regulates a charging current in accordance with the characteristics of the storage battery 31. During the discharging of the storage battery 31, the controller 22 regulates a discharging current in accordance with the power consumed in the electrical load(s), the battery level of the storage battery 31, and the like.

Incidentally, whether the storage battery 31 is charged or discharged is determined based: not only on the state of the operation of the storage battery 31; but also on information on the unit charge of electricity purchased from the power grid 40. In the price setting system of the present embodiment, unit charges of electricity are set by the price setting device **10** in consideration with an anomalous event.

The price setting device **10** is connected to the power regulation device **20** through a telecommunication network **NT1** such as Internet network, which is a wide area network, and is able to communicate therewith. Note that the price regulation device **20** includes a communication I/F unit 23 configured to be connected to the telecommunication network **NT1**.

The price setting device **10** may be constituted by a single computer, or more preferably, be constituted by a cloud computing system which can realize simultaneous notification of unit charges set by the price setting device **10** to a plurality of power regulation devices **20** existing in a plurality of areas.

The price setting device **10** includes an acquisition unit **11** configured to acquire one or more warning notifications (a collection of forecast information). The acquisition unit **11** is, typically, configured to acquire the warning notification from an external device through the telecommunication network. For example, the acquisition unit **11** is configured to acquire the warning notification (forecast information) through the communication interface unit **14**. The warning notification includes a type of event regarding a disaster, an area where the warning notification is directed, and date and time.

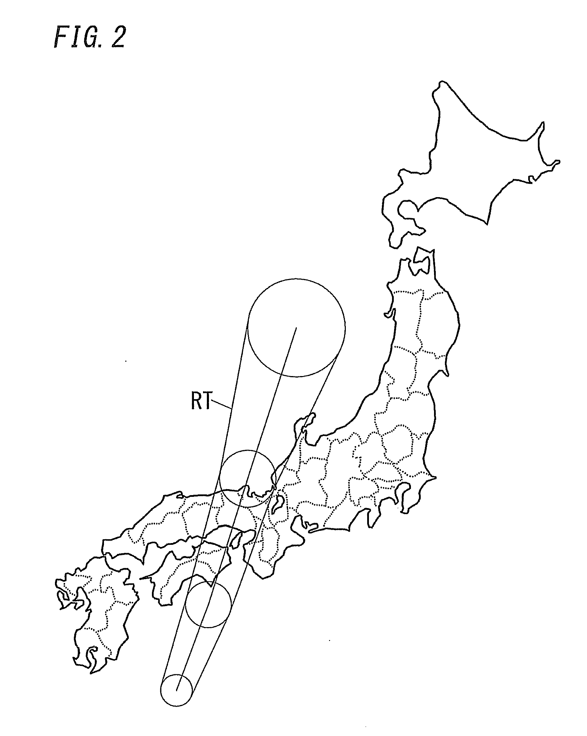

Regarding the warning notification, it will be explained a case of a typhoon which is a phenomenon of weather. FIG. 2 shows an example of an anticipate route **RT** of a typhoon and date and time when the typhoon passes through each spot of the anticipate route RT. In the figure, each circle indicates a forecasted course of the typhoon, and the anticipate route RT is defined as a region within tangent lines each of which connects adjacent circles. When an anticipate route RT of a typhoon is forecasted as in this example, warning notifications such as rainstorm warning, storm surge warning and the like would be issued by, for example, Japan Meteorological Agency in JAPAN, to the areas which exist in or around the anticipate route RT, based on this forecasted route.

In a case where the anomalous event is a typhoon, in preparation for a damage (electric outage) of the power grid 40, it is expected that owners of storage batteries 31 may start charging of their storage batteries 31 on or around a day previous to a day when the typhoon comes nearest to their interested areas. Therefore, the possibility of occurrence of the tight supply-demand balance of electric power in or around an area to which a warning notification(s) is to be issued is considered to increase gradually on or around a day previous to a day when the typhoon passes through, and become a maximum on the date and time before the typhoon passes through.

It is considered that such a situation is caused by the human's acts arising from their concerns that the electric power facilities or the electric transmission facilities may be damaged by the typhoon. Of course the electric power supplier cannot exactly predict the human's acts arising from their concerns. Therefore, when the supply-demand balance of electric power becomes tight due to such a situation, the electric power supplier may not be able to timely deal with such a situation.

Regarding this, the price setting device 10 of the present embodiment has a configuration configured to set a unit charge, which is a unit price of consumed power, with respect to each area, and to allow the electric power supplier to provide information on the unit charge for each area. This configuration can offer a system in which electricity can be easily transferred to one or more target areas where the supply-demand balance of electric power is likely to be tight from one or more accommodating areas which are the outside of the one or more target areas, by using a collection of information on the unit charges.

In the embodiment, it is assumed that the anomalous event is caused by a typhoon. Therefore, the acquisition unit 11 acquires one or more warning notifications (weather warning; such as rainstorm warning, high-wave warning and storm surge warning) about the typhoon. The acquisition unit 11 also acquires areas and dates and times to which the one or more warning notifications are provided. The price setting device 10 includes a price setting unit 12 and a period setting unit 13. The price setting unit 12 sets respective unit charges for areas based on the collection of forecast information (one or more warning notifications) acquired by the acquisition unit 11. The period setting unit 13 determines a target period during which the determined unit charges are applied.

The price setting unit 12 estimates one or more areas (one or more target areas) where the supply-demand balance of electric power may become tight, based on the collection of information (collection of forecast information) acquired by the acquisition unit 11. The price setting unit 12 sets a unit charge in one or more areas (accommodating areas) which can transfer electricity to the one or more target areas so that it is higher than a unit charge in the one or more target areas.

When the acquisition unit 11 acquires a collection of forecast information about an anomalous event, the price setting unit 12 designates each of the areas as either "target area" or "accommodating area", based on area(s) related to the collection of forecast information (area(s) to which the warning notification is issued) acquired by the acquisition unit 11. The price setting unit 12 sets the unit charges of the one or more target areas and the one or more accommodating area such that the unit charge in the "accommodating area" is higher than the unit charge in the "target area".

In short, the price setting unit 12 is configured to set a unit charge in one or more accommodating areas to be higher than a unit charge in one or more target areas where the supply-demand balance of electric power may become tight, during the target period determined by the period setting unit 13.

Since it is the warning notification(s) that is acquired by the acquisition unit 11, the price setting unit 12 may be configured to determine "an area adjacent to an area to which a warning notification is issued" as an area (target area) where the supply-demand balance of electric power may become tight, based on one or more areas to which the warning notification(s) are issued. In an example, the period setting unit 13 is configured to determine date and time when a warning notification is issued as a start of a target period, and to determine date and time when the warning notification is cleared as an end of the target period. In other words, the price setting unit 13 is configured to start the target period when a warning notification is issued, to continue the target period when the warning notification is being issued, and to finish the target period when the warning notification is cleared.

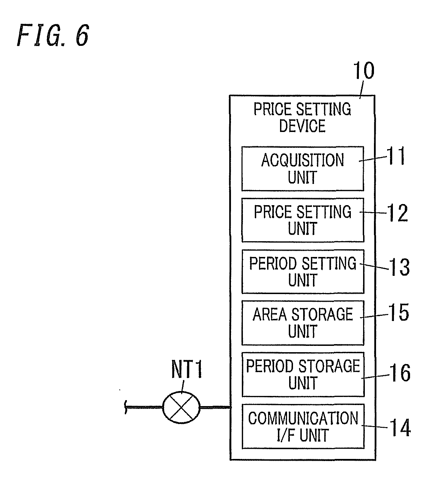

A specific example of the price setting device **10** of the present embodiment will be explained with reference to FIG. 6.

The price setting device **10** of this specific example includes, as described above, the acquisition unit **11**, the price setting unit **12** and the period setting unit **13**. As shown in FIG. 6, the price setting device **10** of this specific example further includes an area storage unit **15** and a period storage unit **16**.

The area storage unit **15** is configured to store respective coverages of areas of which unit charges are set by the price setting device **10**. For example, the area storage unit **15** is configured to store the coverages (as shown in FIG. 4 or 5) of the areas **A1** to **Az** (z=6, in the examples of FIGS. 4 and 5), used as unit areas for setting unit charges.

The period storage unit **16** is configured to store candidates of forecast information which the acquisition unit **11** possibly acquires, and projected periods (projected target periods) associated with the respective candidates. For example, the period storage unit **16** stores "rainstorm warning" as one warning information (a candidate of forecast information) and "during a period the warning is issued" as a projected target period in association therewith.

An operation of this specific example is explained below.

When no forecast information (warning notification) about an anomalous event is received by the acquisition unit **11** (in a normal state), the price setting unit **12** sets an identical unit charge to each of the areas **A1** to Az.

When the acquisition unit 11 acquires a collection of forecast information about an anomalous event, the period setting unit 13 compares the collection of forecast information acquired by the acquisition unit 11 with a relation between a candidate of forecast information and projected target period associated therewith, which are stored in the period storage unit 16, and to determine a target period.

Also, when the acquisition unit 11 acquires a collection of forecast information about an anomalous event, the price setting unit 12 compares one or more areas related to the collection of forecast information acquired by the acquisition unit 11 (namely, one or more areas to which the warning notifications are issued) with the coverages of areas A1 to Az stored in the area storage unit 15, and to designate each of the areas A1 to Az as either "target area" or "accommodating area". Note that the price setting unit 12 designates each of the areas A1 to Az as either "target area" or "accommodating area" such that all of the areas to which the warning notification are issued are designated as the "target area".

The price setting unit 12 sets the unit charges of the one or more target areas and the accommodating areas such that a unit charge in the "one or more accommodating areas" is higher than a unit charge in the "one or more target areas", during the target period determined by the period setting unit 13. For example, the price setting unit 12 sets the unit charge in the one or more target areas to a first value, and sets the unit charge in the one or more accommodating areas to a second value higher than the first value, during the target period.

When the target period ends, the price setting unit 12 sets the identical unit charge to each of the areas A1 to Az.

Note that the period setting unit 13 may be configured to determine a start of a target period as the date and time when the warning notification is issued, and to estimate an end of the target period in accordance with the type of the anomalous event. For example, some anomalous events, which cause warning notifications, may cause damages, and unusual state (state where the supply-demand balance may become tight) may continue even after the warning notifications are cleared. Therefore, it is desirable that the end of the target period be determined appropriately separately.

The period setting unit 13 may be configured to set a start and an end of a target period based on information about an anomalous event, even before the acquisition unit 11 acquires a warning notification. For example, in a case where the acquisition unit 11 is configured to acquire information on an anticipate route RT of a typhoon as an anomalous event and date and time the typhoon passes through each area, the period setting unit 13 can estimate one or more target areas based on the anticipate route RT and can estimate a target period based on the date and time the typhoon passes through each area.

That is, it is desirable that the period setting unit 13 be configured to determine the target period based on a type of the anomalous event together with the collection of forecast information acquired by the acquisition unit 11. By using the type of the anomalous event together with the collection of forecast information for determining the target period, the period setting unit 13 can estimate more precisely the target period in which a supply-demand balance of electric power may become tight.

A unit charge set by the price setting unit 12 is notified to a terminal device 50 owned by a user. The price setting device 10 includes the communication interface unit (hereinafter, referred to as "communication I/F unit") 14 configured to communicate with the terminal device 50. The type of the terminal device 50 is not limited particularly. Also, the communication channel between the communication I/F unit 14 and the terminal device 50 is not limited particularly. Examples of the terminal device 50 include a smartphone, a tablet terminal and a television set. Examples of the communication channel include a mobile communication network, Wi-Fi (trademark), and a CATV network.

Above examples of the terminal device 50 are used daily by users, and information can be displayed with a "push" type notification. Therefore, the price setting device 10 can, during the period determined by the period setting unit 13, provide the unit charge determined by the price setting unit 12 to terminal devices 50 of users staying in the one or more accommodating areas, and thereby to inform it to the users. The unit charge in the one or more accommodating areas is set higher than that in the one or more focused areas (one or more target areas). Therefore, the users in the one or more accommodating areas are motivated to save electricity. As a result, a margin of electric power in the one or more accommodating areas can be likely to increase, and thus transferring of electricity to the one or more target areas can be facilitated.

Preferably, a unit charge in the one or more accommodating areas during the target period be set higher than a unit charge in the one or more accommodating areas in a period other than the target period. In this case, the users in the one or more accommodating areas are motivated to save electricity during the target period. A unit charge in the one or more target areas during the target period may be set lower than a unit charge in the one or more target areas in a period other than the target period, or be equal to that in the target period.

As described above, a first aspect of the price setting device includes the acquisition unit **11**, the period setting unit **13** and the price setting unit 12. The acquisition unit **11** is configured to acquire a collection of forecast information on areas **A1** to **Az** to which at least one electric power supplier supplies electricity, each of the collection of forecast information including forecasted date and time if a corresponding area is to be affected by an anomalous event. The period setting unit **13** is configured to determine a target period based on the collection of forecast information. The price setting unit **12** is configured to set a unit charge, which is unit price of electricity, during the target period in one or more accommodating areas so that it is higher than a unit charge in one or more target areas. The one or more target areas are one or more areas of the areas **A1** to **Az** to be affected by the anomalous event. The one or more accommodating areas are one or more areas of the areas **A1** to **Az** not to be affected by the anomalous event and also capable of interchanging electricity with the one or more target areas.

The price setting device **10** of this aspect includes the price setting unit **12** configured to set a unit charge, which is unit price of electricity, in one or more areas (one or more accommodating areas), which are one or more areas from which electricity can be transferred to one or more areas (one or more target areas) to be affected by an anomalous event, to be higher than that in the one or more target areas. In other words, when a shortage of power supply capacity of an electric power supplier may possibly occur in one or more focused areas (one or more target areas), unit charges in the one or more external areas (one or more accommodating areas) outside the one or more focused areas are set to be higher. With this configuration, consumed power in the one or more accommodating areas would be decreased, and thus the margin of electric power supply can become large in the one or more accommodating areas. With the price setting device 10 of the present embodiment, therefore, transferring the electricity from the accommodating area to the target area can be facilitated. As a result, occurrence of a tight supply-demand balance of electric power can be prevented.

In an example, the anomalous event is a typhoon. The one or more target areas to be affected by the anomalous event are one or more areas where the typhoon is forecasted to pass through.

In a second aspect of the price setting device realized in combination with the first aspect of the price setting device, the anomalous event is an event in which a ratio of total amount of consumed power to a power supply capacity of an electric power supplier is expected to be equal to or more than a threshold.

In a third aspect of the price setting device realized in combination with the first or second aspect of the price setting device, the price setting unit 12 is configured to set a unit charge during the target period in the one or more accommodating areas to be higher than a unit charge in the one or more accommodating areas in a period other than the target period.

In a fourth aspect of the price setting device realized in combination with any one of the first to third aspects of the price setting device, each of the collection of forecast information is warning information about disaster prevention.

In a fifth aspect of the price setting device realized in combination with any one of the first to fourth aspects of the price setting device, the period setting unit 13 is configured to determine the target period based on a type of the anomalous event together with the collection of forecast information.

In a sixth aspect of the price setting device realized in combination with any one of the first to fifth aspects of the price setting device, the at least one electric power supplier includes two or more electric power suppliers **X1** to **Xz**. Each of the areas **A1** to **Az** is defined by a whole district to which a corresponding one **Xi** ("i" is an integer of 1 to z) of the two or more electric power suppliers **X1** to **Xz** supplies electricity.

In a seventh aspect of the price setting device realized in combination with any one of the first to fifth aspects of the price setting device, the at least one electric power supplier is one electric power supplier **X0**. The areas **A1** to **Az** are defined by dividing a whole district **A0** to which the one electric power supplier **X0** supplies electricity.

In a eighth aspect of the price setting device realized in combination with any one of the first to seventh aspects of the price setting device, the price setting unit **12** is configured to determine one or more areas, which are predicted to be affected by the anomalous event based on the collection of forecast information, of the areas **A1** to **Az** as the one or more target areas, and to determine one or more areas, other than the one or more target areas, of the areas **A1** to **Az** as the one or more accommodating areas. The price setting unit **12** is configured to, during the target period, set the unit charge in the one or more target areas to a first value, and set the unit charge in the one or more accommodating areas to a second value higher than the first value.

### (Embodiment 2)

In the price setting system of Embodiment **1**, the price setting device **10** is configured to notify the terminal device **50** of the unit charge, and to thereby allow the user of the terminal device **50** to determine whether the consumed power should be reduced or not. In a price setting system of the present embodiment, it is assumed that an electric vehicle **30** is connected to a power regulation device **20** installed in an accommodating area, as shown in FIG. 3, and that electric power is allowed to be flowed back to a power grid **40** from the power regulation device **20**. It should be noted that, in the embodiment, the power regulation device **20** is configured to determine whether electric power should be flowed back to the power grid **40** based on the unit charge determined by a price setting device **10**.

As described above, the power regulation device **20** includes a power converter **21** configured to perform charging and discharging of a storage battery **31**, and a controller **22** configured to control an operation of the power converter **21**. The power converter **21** is configured to, when performing the discharging of the storage battery **31**, convert the energy stored in the storage battery **31** into an AC power allowed to be flowed back to the power grid 40. In addition to the components described in Embodiment 1, the power regulation device 20 includes a price acquisition unit 24 configured to acquire a unit price (unit charge) from the price setting device 10, and a determination unit 25 configured to provide instruction to the controller 22 in accordance with the unit price.

The price acquisition unit 24 and the determination unit 25 include a device provided with a processor operating in accordance with programs, as main hardware components. This device may be a microcomputer including a processor and an internal memory, or may be constituted by a processor and an additional external memory.

The determination unit 25 is configured to determine a setting value (threshold) with respect to the unit charge acquired by the price acquisition unit 24. In a period in which the unit charge exceeds the setting value, the determination unit 25 provides instruction to the controller 22 so that an operation of allowing power to flow back to the power grid 40 from the power regulation device 20 is performed preferentially to an operation of receiving power from the power grid 40. In a period in which the unit charge is the setting value or less, the determination unit 25 provides instruction to the controller 22 so that operation of receiving electric power from the power grid 40 to the power regulation device 20 to charge the storage battery 31 is preferentially performed to an operation of allowing power to flow back to the power grid 40.

That is, each of the power regulation devices 20 is configured to acquire a unit charge determined by the price setting device 10. A power regulation device 20 in a focused area would preferentially perform charging of a storage battery 31, whereas a power regulation device 20 in an accommodating area would preferentially perform supplying power to flow back to the power grid 40 from a storage battery 31.

In the example of the price setting system of the present embodiment, storage batteries 31 provided in electric vehicles 30 are charged and discharged, but the technique of the present application can be applied to storage batteries installed in customer facilities. Other components and operations are the same as those in Embodiment 1, and explanation thereof is not provided herein.

As described above, a first aspect of the power regulation device includes the price acquisition unit **24**, the power converter **21**, the controller **22**, and the determination unit **25**. The price acquisition unit **24** is configured to acquire information on a unit charge set by the price setting device **10**. The power converter **21** is configured to perform charging and discharging of the storage battery **31**. The controller **22** is configured to control an operation of the power converter **21**. The determination unit **25** is configured to perform charging of the storage battery **31** in preference to discharging thereof in a period in which the unit charge is a predetermined setting value (threshold) or less, and to perform discharging of the storage battery **31** in preference to charging thereof in a period in which the unit charge exceeds the setting value.

In a second aspect of the power regulation device realized in combination with the first aspect of the power regulation device, the storage battery **31** is provided in the electric vehicle **30**.

## Claims

1. A price setting device, comprising:
an acquisition unit configured to acquire a collection of forecast information on areas to which at least one electric power supplier supplies electricity, each of the collection of forecast information including forecasted date and time if a corresponding area is to be affected by an anomalous event;
a period setting unit configured to determine a target period based on the collection of forecast information; and
a price setting unit configured to set a unit charge, which is unit price of electricity, in one or more accommodating areas to be higher than a unit charge in one or more target areas during the target period, the one or more target areas being one or more areas of the areas to be affected by the anomalous event, the one or more accommodating areas being one or more areas of the areas not to be affected by the anomalous event and also capable of interchanging electricity with the one or more target areas.

2. The price setting device of claim 1, wherein the anomalous event is an event in which a ratio of total amount of consumed power to a power supply capacity of an electric power supplier is expected to be equal to or more than a threshold.

3. The price setting device of claim 1 or 2, wherein the price setting unit is configured to set a unit charge during the target period in the one or more accommodating areas to be higher than a unit charge in the one or more accommodating areas in a period other than the target period.

4. The price setting device of any one of claims 1 to 3, wherein each of the collection of forecast information is warning information about disaster prevention.

5. The price setting device of any one of claims 1 to 4, wherein the period setting unit is configured to determine the target period based on a type of the anomalous event together with the collection of forecast information.

6. The price setting device of any one of claims 1 to 5, wherein
the at least one electric power supplier comprises two or more electric power suppliers, and
each of the areas is defined by a whole district to which a corresponding one of the two or more electric power suppliers supplies electricity.

7. The price setting device of any one of claims 1 to 5, wherein
the at least one electric power supplier is one electric power supplier, and
the areas are defined by dividing a whole district to which the one electric power supplier supplies electricity.

8. The price setting device of any one of claims 1 to 7, wherein
the price setting unit is configured
to determine one or more areas, which are predicted to be affected by the anomalous event based on the collection of forecast information, of the areas as the one or more target areas,
to determine one or more areas, other than the one or more target areas, of the areas as the one or more accommodating areas, and
to, during the target period, set the unit charge in the one or more target areas to a first value, and set the unit charge in the one or more accommodating areas to a second value higher than the first value.

9. A power regulation device comprising:
a price acquisition unit configured to acquire information on a unit charge set by the price setting device of any one of claims 1 to 8;
a power converter configured to perform charging and discharging of a storage battery;
a controller configured to control an operation of the power converter; and
a determination unit configured to perform charging of the storage battery in preference to discharging thereof in a period in which the unit charge is a predetermined setting value or less, and to perform discharging of the storage battery in preference to charging thereof in a period in which the unit charge exceeds the setting value.

10. The power regulation device of claim 9, wherein the storage battery is provided in an electric vehicle.
